# EUROPEAN PATENT SPECIFICATION

(11) **EP 0 546 581 B1**
(45) Date of publication and mention of the grant of the patent: **19.03.1997**
(21) Application number: 92121196.7
(22) Date of filing: 11.12.1992
(51) Int. Cl.: B29C 45/27

(54) **Method of making an injection molding nozzle with a heating element extending outward between adjacent collar portions and injection molding nozzle**
Verfahren zur Herstellung einer Spritzgiessdüse mit einem Heisselement herausragend zwischen benachbarten Muffeteilen und Spritzgiessdüse
Procédé de fabrication d'une buse de moulage par injection avec un élément de chauffage s'étendant à l'extérieur entre des parties de manchon adjacentes et buse de moulage par injection

(30) Priority: 13.12.1991 CA 2057594; 04.12.1992 CA 2084296
(43) Date of publication of application: 16.06.1993
(73) Proprietor: Gellert, Jobst Ulrich, Georgetown Ontario L7G 4X5 (CA)
(72) Inventor: Gellert, Jobst Ulrich, Georgetown Ontario L7G 4X5 (CA)
(74) Representative: Grünecker, Kinkeldey, Stockmair & Schwanhäusser Anwaltssozietät

(56) References cited:
- EP-A- 0 303 814
- EP-A- 0 337 468
- FR-A- 2 629 011
- US-A- 4 557 685
- US-A- 5 052 100

## Description

This invention relates to an injection molding nozzle as indicated in the preamble of claim 1.

Injection molding nozzles having a helical integral electrical heating element extending around the central melt bore are well known in the art. As seen in the applicant's U.S. patent number 4,865,535 which issued September 12, 1989, it is also known to have a portion of the heating element swaged back upon itself to provide more heat in certain areas. Of course, each nozzle must have a terminal to which external lead wires are connected to provide power to the heating element. In the past, this has usually been provided by the heating element having end portions which extend outward through a radial opening in a collar portion adjacent the rear end of the nozzle. An example of this is seen in the applicant's U.S. patent number 4,386,262 which issued May 31, 1983. In this case, a so called "hot" terminal is formed by casting beryllium copper around the heating element in a radially extending sleeve. While this terminal is structurally sound, it has the disadvantage that the terminal is too hot which results in possible damage due to overheating of the external lead wires or other adjacent materials. Another example of the end portions of the heating element extending outward through an opening in the collar portion is shown in the applicant's U.S. patent number 4,403,405 which issued September 13, 1983. In this case, half washers mounted in the opening around the heating element prevent the conductive beryllium copper flowing out into the terminal. While this overcomes the problem of the terminal overheating and thus is a so called "cold" terminal, it has the disadvantage that the terminal is not as strong structurally and it is difficult to ensure the terminal extends straight out from the nozzle.

Another example of a method of making a terminal in which the end portion of a heating element has to be run out through a hole in the collar portion is described in the applicant's U.S. patent number 4,837,925 which issued June 13, 1989. However, it is relatively easy to manipulate the end portion of the heating element because it is a low voltage application with the other end of the heating element grounded to the nozzle body and thus there is only a single terminal wire extending to the terminal. Reliable terminals having two terminal wires are more difficult to make than terminals having only a single terminal wire because it is important that the two projecting terminal wires of the heating element extend parallel to each other and are spaced apart a predetermined distance. Also, the terminal must be structurally secure and relatively easy to manufacture without requiring two different brazing steps.

Another injection molding nozzle of the type indicated above is also shown in EP-A1-0 303 814. In that case the heating element is embedded in a spiral groove of varying pitch with a single end of the heating element being guided to project radially outwardly at a rear end of the nozzle body. US-A-5 052 100 comprises a spiral brushing having a heating element in the form of a ceramic insulator sleeve.

Accordingly, it is an objective of the present invention to provide an injection molding nozzle which has an improved heating arrangement, specifically for accommodating a heating element having a pair of terminal ends projecting radially outwards.

To this end, the invention provides an injection molding nozzle having an elongated nozzle body with a rear end a forward end and a generally cylindrical outer surface, a melt bore extending through said nozzle body, a collar body disposed at the rear end of the nozzle body and supporting a cold terminal for a radially projecting end of a heating element disposed in a spiral channel along the outer surface of the nozzle body, wherein the collar member comprises forward and rear collar portions defining a radial opening therebetween for leading through at least one projecting end portion of the heating element. Said spiral channel forms a double channel extending rearwardly in a predetermined pattern from a U-bend portion adjacent to the forward end of the nozzle body.

Other preferred embodiments of the nozzle according to the present invention are laid down the dependent claims.

In the following, the present invention is explained in further detail by means of preferred embodiment thereof in conjunction with the accompanying drawings, wherein:
Figure 1 is an exploded isometric view of components of the nozzle illustrating some of the steps of making the nozzle according to a preferred embodiment of the invention,
Figure 2 is a schematic view illustrating one pattern of the heating element channel around the outer surface of the nozzle body, and
Figure 3 is a cut-away isometric view showing additional components to illustrate further steps of making the terminal according to this embodiment of the invention,
   and
Figure 4 is a cut-away isometric view similar to Figure 3 showing the steps of making the nozzle according to another embodiment of the invention.

### DETAILED DESCRIPTION OF THE DRAWINGS

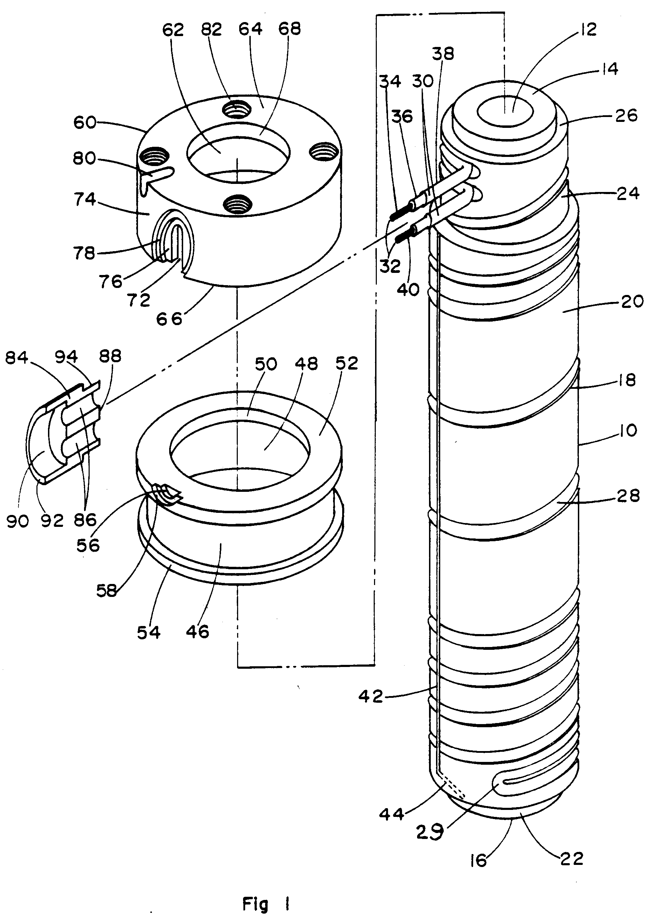

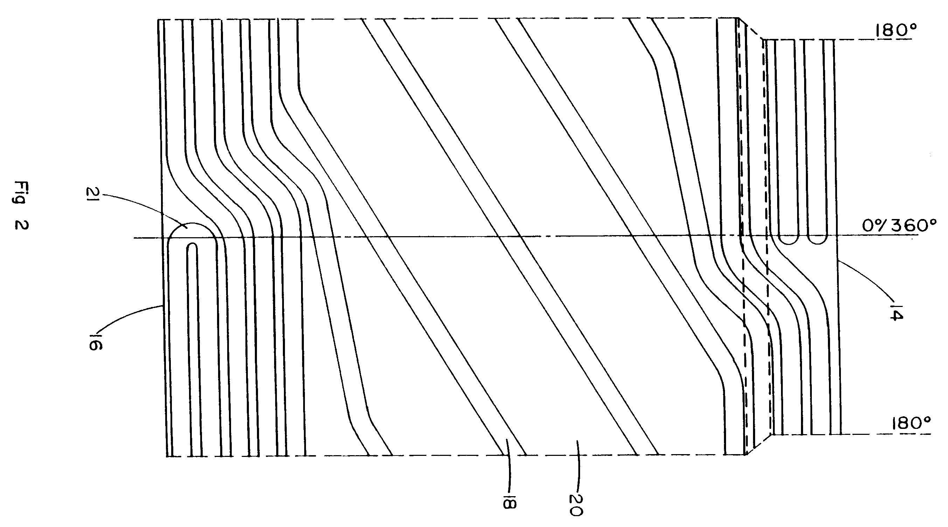

Reference is first made to Figure 1 which shows components of an injection molding nozzle having a double channel and a terminal for two terminal wires and how they are assembled. An elongated outer body 10 having a central melt bore 12 extending from a rear end 14 to a forward end 16 is made of tool steel. While the nozzle body 10 illustrated in this embodiment is made of one piece, it may also be made by joining several longitudinal sections to provide different selected sizes and lengths as described in the applicant's U.S. patent number 4,945,630 which issued August 7, 1990. The nozzle body 10 is made with a spiral channel 18 extending around its outer surface 20. The spiral channel 18 is a double channel which extends rearwardly from a U-shaped bend portion 21 adjacent the forward end 16 of the nozzle body 10. As illustrated in Figure 2, the double channel 18 is made with a predetermined pattern to vary the amount of heat provided along the surface 20 of the nozzle body 10 according to the requirements of the system. In this embodiment, the double spiral channel 18 is more concentrated near the rear and forward ends 14, 16 of the outer body 10 so more heat is provided in those areas than in the middle of the body 10. While the outer surface 20 of the nozzle body 10 is generally cylindrical, in this embodiment it is made with a bevel 22 at the forward end 16, and a reduced diameter portion 24 extending from an inwardly extending seat 26 adjacent the rear end 14. An electrical heating element 28 is wound in the double spiral channel 18 with a U-shaped bend 29 received in the U-shaped bend portion 21 of the channel 18 and two end portions 30 projecting radially outward near the rear end 14 of the body 10 to two ends 32. As is well known in the art, the heating element 28 has a thin heating wire 34 which extends through an insulating material 36 such as magnesium oxide inside a steel casing 38. The heating wire 34 is connected to a terminal wire 40 at each end 32. The two terminal wires 40 have a much larger diameter than the thin heating wire 34 so they are not hot. In this embodiment, the outer casing 38 has been stripped back slightly further than the insulating material to avoid any possibility of electrical shorting occurring between the heating wire 34 and the surrounding outer casing 38. A thin hollow thermocouple tube 42 is tack welded to the outer surface 20 of the body 10 over the heating element 28 to extend longitudinally to a thermocouple bore 44 which is machined diagonally into the body 10 of the nozzle adjacent its forward end 16.

A forward collar portion 46 is made of steel with a circular opening 48 of a predetermined diameter to fit over the outer surface 20 of the outer body 10. In this embodiment, the forward collar portion 46 is made with an inwardly extending rear flange portion 50 which forms a rear face 52 and an insulation flange portion 54 which extends forwardly from the rear flange portion 50. In this embodiment, the rear face 52 of the forward collar portion 46 is made with an inner segment 56 and an outer segment 58 of two seats which are described in more detail below. The forward collar portion 46 is mounted around the body 10 with the seat segments 56, 58 adjacent to and aligned with the two projecting end portions 30 of the heating element 28. If the forward collar portion 46 is made with a circular opening 48 which fits over the reduced diameter portion 24 of the outer surface 20, but is too small to slide over the forward end 16 of the body 10, it is mounted from the rear by moving it inwardly on an angle over the projecting end portions 30 of the heating element 28 and then turning it forwardly over the rear end 14 of the body 10.

A rearward collar portion 60 is made of steel with a circular opening 62 extending centrally from a rear face 64 to a forward face 66. In this embodiment, the circular opening 62 is made to fit around the reduced diameter portion 24 of the outer surface 20 of the body 10 and the collar portion 60 is made with an inwardly extending flange portion 68 which fits in the inwardly extending seat 26 at the rear end 14 of the body 10. Also, the forward face 66 of the rearward collar portion 60 is made with a forwardly extending inner rim 70 which interlocks with the rear face 52 of the forward collar portion 46 when they abut against each other. Of course, in other embodiments, the outer surface 20 of the body 10, the forward collar portion 46, and the rearward collar portion 60 can be made with different suitable shapes which fit together. The rearward collar portion 60 is made with a radial slot 72 therethrough extending longitudinally away from the forward face 66. The outer wall 74 of the rearward collar portion 60 has an inner seat 76 and a larger outer seat 78 which extend around the longitudinal slot 72. These outwardly open seats 76, 78 in the rearward collar portion 60 are made circular, except that, in this embodiment, a portion of each of them is formed by the matching inner and outer seat segments 56, 58 in the rear face 52 of the forward collar portion 46. The rearward collar portion 60 is made with the rear face 64 having a slot 80 to receive a thermocouple wire and threaded bolt holes 82 to receive bolts (not shown) for mounting purposes. The rearward collar portion 60 is mounted over the rear end 14 of the body 10 with the seats 76, 78 around the longitudinal slot 72 aligned with the seat segments 56, 58 in the forward collar portion 46. The forward face 66 abuts against the rear face 52 of the forward collar portion 46 with which the inner rim 70 interlocks to ensure proper location. The inwardly extending flange portion 68 is received in the seat 26 around the rear end 14 of the body 10 with the rear face 64 of the rearward collar portion 60 flush with the rear end 14 of the body 10. The end portions 30 of the heating element 28 extend outwardly through the slot 72 in the rearward collar portion 60, and the inner and outer circular seats 76, 78 around the slot 72 are partially formed by each of the forward and rearward collar portions 46, 60. In other embodiments, the forward and rearward collar portions 46, 60 may be made to combine differently to form the slot 72 or a different shaped opening between them

A stud portion 84 is made of steel with two bores 86 extending from the inner end 88 to a central bore 90 extending from the outer end 92. The two bores 86 extend parallel to each other and are spaced apart a predetermined distance. Each bore 86 is just large enough to fit over one of the outwardly extending end portions 30 of the heating element 28. While the stud portion 84 is made generally cylindrical, it has a smaller diameter neck portion 94 at the inner end 88 which fits in the inner seat 76 around the longitudinal slot 72. As seen in Figure 2, the stud portion 84 is mounted with the neck portion 94 at its inner end 88 seated in the inner seat 76 around the slot 72, and the end portions 30 of the heating element 28 extending through the two parallel bores 86. This structurally supports the outwardly projecting end portions 30 of the heating element 28 and ensures that they extend radially outward and are parallel and spaced apart a predetermined distance.

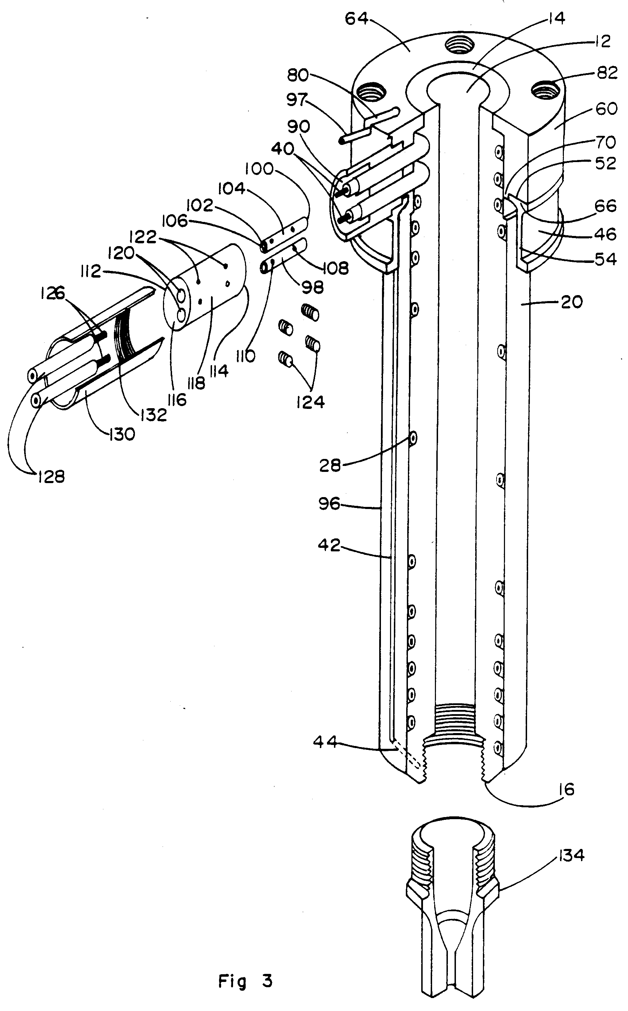

When the components described above are mounted together as seen in Figure 3, brazing material such as nickel alloy paste is applied along the joins between them and around the two end portions 30 of the heating element 28 which extend through the two bores 86 of the stud portion 84. Brazing material is also applied along the heating element 28 wound in the spiral channel 18 similar to the description in the applicant's U.S. patent number 4,557,685 which issued December 10, 1985. The assembly is then inserted into a vacuum furnace (not shown) and heated above the melting temperature of the brazing material according to a predetermined cycle. As the furnace is gradually heated, it is evacuated to a relatively high vacuum to remove nearly all of the oxygen. Before the melting temperature of the brazing material is reached, the vacuum is reduced by partially backfilling with an inert gas such as argon or nitrogen. When the nickel alloy brazing material melts, it flows by capillary action along the joins between the components and around the heating element 28 to completely embed it in the channel 18. This brazing in the vacuum furnace provides a metallurgical bonding of the nickel alloy to the steel of the various components to form a metallurgically monolithic integral heated nozzle 96. After the nozzle 96 is cooled and removed from the vacuum furnace, it is machined to provide a smooth outer finish. A thermocouple bore (not shown) is machined through the forward and rearward collar portions 48, 60 to connect the thermocouple slot 80 in the rear face 66 of the rearward collar portion 60 to the thermocouple tube 42 which is now also integrally brazed along the outer surface 20 of the body 10. As seen in Figure 3, a thermocouple wire 97 is then inserted through this thermocouple bore and thermocouple tube 42 and bent outwardly through the thermocouple slot 80 to monitor the operating temperature adjacent the forward end 16 of the body 10.

Referring more specifically to Figure 3, a pair of elongated metal connectors 98 are made each having an inner end 100, an outer end 102, a cylindrical outer surface 104, and a longitudinal bore 106 large enough to receive bare electrical wires therein. Each connector 98 is also made with inner and outer longitudinally spaced threaded bores 108, 110 extending from the longitudinal bore 106 to the outer surface 104. Each connector 98 is mounted over the end 32 of one of the radially projecting end portions 30 of the heating element 28 with the bared wire portion 40 extending from the inner end 100 of the connector 98 into the longitudinal bore 106 past the inner threaded transverse bore 108.

An insulator 112 having an inner end 114, outer end 116, and a cylindrical outer surface 118 is made of a suitable ceramic insulating material. The insulator 112 is also made with two spaced parallel longitudinal bores 120 and two longitudinally spaced transverse openings 122 extending from each longitudinal bore 120 to the outer surface 118. The insulator 112 is mounted over the projecting connectors 98 with its inner end 114 received in the central bore 90 of the stud portion 84. Each of the metal connectors 98 is received in one of the longitudinal bores 120 of the insulator 112 with the threaded transverse bores 108, 110 in the connectors 98 aligned with the transverse openings 122 in the insulator 112. A set screw 124 is then inserted through each transverse opening 122 in the insulator 112 into the aligned threaded transverse bore 108, 110 in the connectors 98, and the set screws in the inner threaded bores 108 of the connectors 98 are tightened on the bared wire portions 40 of the projecting end portions 30 of the heating element 28 to securely connect each connector 98 to one end 32 of the heating element 28. Alternatively, the connectors 98 can first be inserted into the insulator 112 and then connected to the ends 32 of the heating element 28.

As seen in Figure 3, a bared end 126 of an electrical external lead wire 128 can be inserted into the longitudinal bore 106 of each metal connector 98 from the outer end 102 past the outer threaded transverse bore 110. The set screw 124 in each outer threaded bore 110 is then tightened to securely connect the lead wires 128 to the connector 98. It will be appreciated that the lengths of the bared wire portions 40 of the end portions 30 of the heating element 28, the bared ends 126 of the lead wires 128, and the connectors 98 must be predetermined to ensure they are securely connected together. Also, the lengths of the end portions 30 of the heating element 28, the stud portion 84, and the insulator 112 must also be predetermined to ensure the metal connectors 98 are entirely inside the insulator 112. Finally, a hollow protective terminal sleeve 130 which was previously located over the lead wires 128 is mounted to extend outwardly from the stud portion 84 around the insulator 112. The protective sleeve 130 has a threaded inner end 132 which is screwed over the threaded stud portion 84 into the outer seat 78 around the longitudinal slot 72. In addition to protecting the connectors 98 and insulator 112, this adds structural strength to the terminal to prevent it getting bent from its correct position.

In use, a gate insert 134 or nozzle seal which is shaped to provide a desired gating configuration is mounted in the forward end 16 of the completed nozzle 96. One or more nozzles 96 are mounted in a suitable mold with the insulation flange portion 54 received in a suitable seat in a cavity plate to locate and support the nozzle. The insulation flange portion 54 which extends forwardly is spaced outwardly a predetermined distance from the outer surface 20 of the body 10 to provide thermal insulation to avoid excessive heat loss. Electrical power is provided to the heating element 28 of each nozzle 96 through the lead wires 128 to heat them to a predetermined operating temperature. Pressurized melt from a molding machine is then injected to flow through the central bore 12 of the body 10 of each nozzle 96 and into cavities through the adjacent gates. After the cavities are filled, injection pressure is held momentarily to pack and then released. After a short cooling period, the mold is opened to eject the molded products. After ejection, the mold is closed and injection pressure is reapplied to refill the cavities. This cycle is continuously repeated with a frequency dependent on the size and shape of the cavities and the type of material being molded.

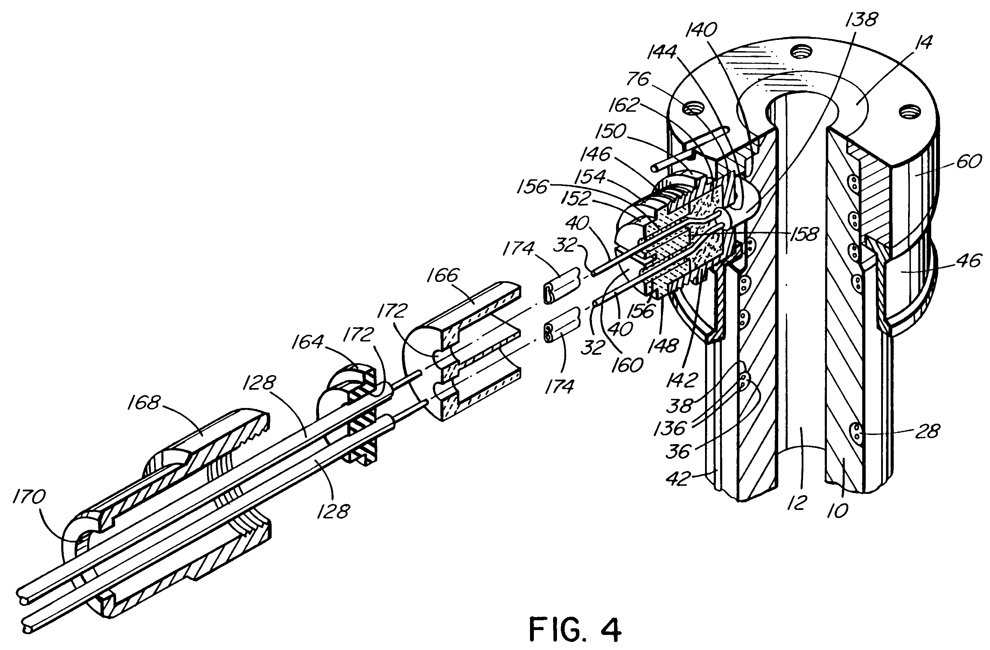

Reference is now made to Figure 4 to describe a method of making an injection molding nozzle according to another embodiment of the invention. As some of the elements are the same or similar to those described above, common elements are described and illustrated using the same reference numerals. In this embodiment, the heating element 28 is made with a double heating wire 136 extending in the insulating material 36 in a single casing 38. Thus, rather than the entire heating element 28 including the casing 38 being made with a U-shaped bend, only the heating wire 136 itself has a U-shaped bend (not shown) near the forward end 16 of the nozzle body 10. The double heating wire 136 is connected to two larger diameter terminal wires 40 which project outwardly to two ends 32 from a single end portion 138 of the heating element 28 which extends radially outward near the rear end 14 of the body 10 of the nozzle.

The forward collar portion 46 and rearward collar portion 60 are made as described above and mounted with the single end portion 138 of the heating element 28 extending out through the opening 140 between them. In this embodiment, the steel stud portion 142 is made with only a single bore 144 extending therethrough and with a threaded portion 146 extending from the outer end 148 to a small circumferential flange 150. The stud portion 142 is mounted in the seat 76 in the forward and rearward collar portions 46, 60 with the single end portion 138 extending out through the single bore 144. The assembly is then integrally brazed together in a vacuum furnace as described above.

In this embodiment, a generally cylindrical ceramic spacer portion 152 is made with a small circumferential flange 154 and two parallel bores 156 spaced a predetermined distance apart extending from an inner end 158 to an outer end 160. The spacer portion 152 is securely mounted by ceramic paste in the stud portion 142 with the flange 154 abutting against the outer end 148 of the stud portion 142. As can be seen, the two terminal wires 40 extending from the single end portion 138 of the heating element 28 diverge in a space 162 in the stud portion 142 where they are surrounded by ceramic paste and then extend out through the two parallel bores 156 in the spacer portion 152.

In use, the connection of the two electrical lead wires 128 is completed using a disc shaped silicon rubber seal 164 and a ceramic insulative sleeve 166 which fit in a threaded steel cap 168. The seal 164 fits in an opening 170 in the outer end of the cap 168, and the seal 164 and the insulative sleeve 166 have a pair of spaced parallel bores 172 extending therethrough to receive the two lead wires 128. The cap 168, seal 164, and insulative sleeve 166 slide up the lead wires 128 out of the way and the lead wires 128 are then fastened to the projecting terminal wires 40 of the heating element 28 by electrical crimps 174. The sleeve 166, seal 164, and cap 168 are then slid down into place around the crimps 174 and the threaded cap 168 is tightened onto the threaded stud portion 142. The silicon rubber seal 164 prevents moisture entering the terminal, and this arrangement has excellent structural strength and facilitates connecting and disconnecting the lead wires 128 to the nozzle.

While the description of making the heated manifold has been given with respect to preferred embodiments, it will be evident that various modifications are possible without departing from the scope of the invention as understood by those skilled in the art and as defined in the following claims. For instance, in another embodiment the heating element 28 is made with the casing 38 having a sharp U-shaped bend so the outward and return casing 38 both extend in side by side contact in a single spiral channel 18.

## Claims

1. Injection moulding nozzle having an elongated nozzle body (10) with a rear end (14) a forward end (16) and a generally cylindrical outer surface (20), a melt bore (12) extending through said nozzle body (10), a collar body disposed at the rear end (14) of the nozzle body (10) and supporting a cold terminal for a radially projecting end (30) of a heating element (28) disposed in a spiral channel (18) along the outer surface (20) of the nozzle body, wherein the collar member comprises forward and rear collar portions (46,60) defining a radial opening (72) therebetween for leading through at least one projecting end portion (30) of the heating element (28), **characterised in that,** the spiral channel (18) forms a double channel extending rearwardly in a predetermined pattern from a U-bend portion (21) adjacent to the forward end (16) of the nozzle body (10).

2. Injection moulding nozzle as claimed in claim 1,
**characterised in that**
a stud portion (84) is received in said opening (72) to extend radially outwardly of said collar member (46,60), said stud portion (84) comprising at least one bore (86) to receive the projecting end (30) of the heating element (28) therein, preferably the stud portion (84) comprises two spaced apart parallel bores (86) to receive a pair of radially projecting ends (30) of the heating element (28) therein.

3. Injection moulding nozzle as claimed in claims 1 or 2,
**characterised in that**
the forward and rear collar portions (46,60) comprise an interlocking engagement means (70,52) forming the composite collar member in an assembled condition.

4. Injection moulding nozzle as claimed in at least one of the preceding claims 1 to 3, **characterised in that** the forward collar portion (46) comprises an inwardly extending rear flange portion (50) and an insulation flange portion (54) which extends forwardly from the rear flange portion (50).

5. Injection moulding nozzle as claimed in claims 2 and 4
**characterised in that**
a rear face (50) of the forward collar portion (46) comprises an inner segment (56) and an outer segment (58) to form a seat arrangement for receiving a neck portion (94) of the stud portion (84).

6. Injection moulding nozzle as claimed in claim 5
**characterised in that**
said seat segments (56,58) are provided adjacent to an aligned with the two projecting end portions (30) of the heating element (28) in an assembled condition thereof.

7. Injection moulding nozzle as claimed in at least one of the preceding claims 1 to 6
**characterised in that**
the nozzle member (10) is adapted to support the rearward collar member (60) on a part (24) of its rear end (14) having a reduced diameter.

8. Injection moulding nozzle as claimed in at least one of the preceding claims 1 to 7,
**characterised in that**
the rearward collar portion (60) comprises an inwardly extending flange portion (68) which fits in an inwardly extending seat (26) at the rear end (14) of the nozzle body (10).

9. Injection moulding nozzle as claimed in at least one of the preceding claims 2 to 8,
**characterised in that**
the rearward collar portion (60) comprises a radial slot (72) extending axially away from a forward face (66), said slot (72) being surrounded by an inner seat (76) and a larger outer seat (78), said seats (76,78) matching with the seat segments (56,58) of the forward collar portion (46) in an assembled condition to form a receipt structure for the stud portion (84).

10. Injection moulding nozzle as claimed in at least one of the preceding claims 1 to 9,
**characterised in that**
the heating element comprises a fine resistance wire extending rearwardly from a U-bend adjacent to the forward end of the nozzle body through said spiral channel forming a single groove.

11. Injection moulding nozzle as claimed in claim 10,
**characterised in that**
the fine resistance wire comprises two portions which extend side by side from the U-bend adjacent to the forward end of the nozzle body rearwardly insulated in a common case through the single groove of the spiral channel, terminating in a pair of ends which radially project from the spiral channel at the rear end of the nozzle body.

12. Injection moulding nozzle as claimed in at least one of preceding claims 1 to 11,
**characterised in that**
a cold terminal for electrically connecting the heating elements (28) to an external source of power supply comprises terminal wires (40) connected to the heating wire (34) of the heating element (28) at each of the projecting ends (30) of the heating elements, said terminal wires (40) provide a larger diameter than the fine heating wire (34) of the heating element (28), said terminal wires (40) having bared ends to be connected to elongated metal connectors (98) which, in turn, are received in an insulator (112) which is surrounded by a protective terminal sleeve (130) whereas bared ends (126) of external lead wires (128) are connected to the outer end of the connectors (98).

## Patentansprüche

1. Spritzgießdüse mit einem langgestreckten Düsenkörper (10) mit einem hinteren Ende (14), einem vorderen Ende (16) und einer im wesentlichen zylindrischen Außenoberfläche (20), einer Schmelzebohrung (12), die sich durch den Düsenkörper (10) erstreckt, einem Kragenkörper, der am hinteren Ende (14) des Düsenkörpers (12) angeordnet ist und einen Kaltanschluß für ein radial vorspringendes Ende (30) eines Heizelementes (28), das in einem sich entlang der Außenoberfläche (20) des Düsenkörpers erstreckenden Spiralkanal (18) erstreckt, zu lagern, wobei das Kragenteil einen vorderen und einen hinteren Kragenabschnitt (46, 60) aufweist, zwischen denen eine radiale Öffnung (72) gebildet ist, zur Durchführung zumindest eines vorspringenden Endabschnittes (30) des Heizelementes (28), **dadurch gekennzeichnet**, daß der Spiralkanal (18) einen Doppelkanal bildet, der sich in einem vorgegebenen Muster von einem U-Biegungsabschnitt (21), der dem vorderen Ende (19) des Düsenkörpers (10) benachbart ist, nach hinten erstreckt.

2. Spritzgießdüse nach Anspruch 1, **dadurch gekennzeichnet**, daß ein Stützabschnitt (84) in der Öffnung (72) aufgenommen ist, um sich in Bezug auf das Kragenteil (46, 60) radial nach außen zu erstrecken, wobei der Stützabschnitt (84) zumindest eine Bohrung (86) aufweist, um das vorspringende Ende (30) des Heizelementes (28) darin aufzunehmen, vorzugsweise der Stützabschnitt (84) zwei beabstandete Parallelbohrungen (86) aufweist, um ein Paar radial vorspringender Enden (30) des Heizelementes (28) darin aufzunehmen.

3. Spritzgießdüse nach Anspruch 1 oder 2, **dadurch gekennzeichnet**, daß der vordere und hintere Kragenabschnitt (46, 60) eine zwischenverriegelnde Eingriffseinrichtung (70, 52) aufweist, zur Ausbildung des zusammengesetzten Kragenteiles in einem montierten Zustand.

4. Spritzgießdüse nach zumindest einem der vorhergehenden Ansprüche 1 bis 3, **dadurch gekennzeichnet**, daß das vordere Kragenteil (46) einen sich einwärts erstreckenden hinteren Flanschabschnitt (50) und einen Isolierflanschabschnitt (54) aufweist, der sich vor dem hinteren Flanschabschnitt (50) erstreckt.

5. Spritzgießdüse nach Anspruch 2 und 4, **dadurch gekennzeichnet**, daß eine hintere Fläche (50) des vorderen Kragenteiles (46) ein inneres Segment (56) und ein äußeren Segment (58) aufweist, zur Bildung einer Sitzanordnung, zum Aufnehmen eines Halbaschnittes (94) des Stützabschnittes (84).

6. Spritzgießdüse nach Anspruch 5, **dadurch gekennzeichnet**, daß die Sitzsegmente (56, 58) benachbart zu und in Ausrichtung mit den beiden vorspringenden Endabschnitten (30) des Heizelementes (28) in einem montierten Zustand desselben angeordnet sind.

7. Spritzgießdüse nach zumindest einem der vorhergehenden Ansprüche 1 bis 6, **dadurch gekennzeichnet**, daß das Düsenteil (10) vorgesehen ist, das hintere Kragenteil (60) an einem Teil (64) seines hinteren Endes (14), das einen verminderten Durchmesser aufweist, zu lagern.

8. Spritzgießdüse nach zumindest einem der vorhergehenden Ansprüche 1 bis 7, **dadurch gekennzeichnet**, daß der hintere Kragenabschnitt (60) einen sich nach einwärts erstreckenden Flanschabschnitt (68) aufweist, der in einen einwärts sich erstreckenden Sitz (26) am hinteren Ende (14) des Düsenkörpers (10) paßt.

9. Spritzgießdüse nach zumindest einem der vorhergehenden Ansprüche 2 bis 8, **dadurch gekennzeichnet**, daß das hintere Kragenteil (60) einen radialen Schlitz (72) aufweist, der sich axial von einer vorderen Fläche (66) weg erstreckt, wobei der Schlitz (72) durch einen inneren Sitz (76) und einen größeren, äußeren Sitz (78) umgeben ist, wobei die Sitze (76, 78) in einem montierten Zustand mit den Schlitzsegmenten (56, 58) des vorderen Kragenteiles (46) zusammenpassen, um eine Aufnahmeanordnung für den Stützabschnittt (84) zu bilden.

10. Spritzgießdüse nach zumindest einem der vorhergehenden Ansprüche 1 bis 9, **dadurch gekennzeichnet**, daß das Heizelement einen Fein-Widerstandsdraht aufweist, der sich von einer U-Biegung benachbart zu dem vorderen Ende des Düsenkörpers durch den Spiralkanal, der eine einzige Nut bildet, nach rückwärts erstreckt.

11. Spritzgießdüse nach Anspruch 10, **dadurch gekennzeichnet**, daß der Fein-Widerstandsdraht zwei Abschnitte aufweist, die sich nebeneinanderliegend von der U-Biegung benachbart dem vorderen Ende des Düsenkörpers nach hinten erstrecken, wobei sie in einem gemeinsamen Mantel durch die einzige Nut des Spiralkanales isoliert sind und in einem Paar Enden auslaufen, die radial von dem Spiralkanal am hinteren Ende des Düsenkörpers vorspringen.

12. Spritzgießdüse nach zumindest einem der vorhergehenden Ansprüche 1 bis 11, **dadurch gekennzeichnet**, das ein Kaltanschluß zum elektrischen Verbinden der Heizelemente (28) mit einer äußeren Energiequelle zwei Anschlußdrähte (40) aufweist, die mit dem Heizdraht (34) des Heizelementes (28) an jeden der vorspringenden Enden (30) des Heizelementes verbunden sind, wobei die Anschlußdrähte (40) einen größeren Durchmesser aufweisen als der Fein-Heizdraht (34) des Heizelementes (28), wobei die Anschlußdrähte (40) freigelegte Enden aufweisen, zur Verbindung mit langgestreckten Metallverbindern (98), die ihrerseits in einem Isolator (112) aufgenommen sind, der durch eine Anschluß-Schutzhülse (130) umgeben ist, während die freigelegten Enden (126) der äußeren Leitungsdrähte (128) mit dem äußeren Ende der Verbinder (98) verbunden ist.

## Revendications

1. Buse de moulage par injection ayant un corps de buse (10) allongé pourvu d'une extrémité arrière (14) et d'une extrémité avant (16), et d'une surface extérieure (20) globalement cylindrique, un alésage à produit en fusion (12) s'étendant dans ledit corps de buse (10), un corps de bague disposé à l'extrémité arrière (14) du corps de buse (10) et supportant une borne froide pour une extrémité (30) saillant radialement d'un élément de chauffage (28) disposé dans un canal à spires (18), le long de la surface extérieure (20) du corps de buse, dans laquelle l'organe formant bague comprend des parties de bague avant et arrière (46, 60) définissant entre elles une ouverture radiale (72), afin d'y faire passer au moins une partie d'extrémité saillante (30) de l'élément de chauffage (28), caractérisée en ce que le canal à spires (18) forme un canal double s'étendant vers l'arrière selon un motif prédéterminé, à partir d'une partie (21) coudée en U, de manière adjacente à l'extrémité avant (16) du corps de buse (10).

2. Buse de moulage par injection selon la revendication 1, caractérisée en ce qu'une partie d'appendice (84) est logée dans ladite ouverture (72) afin de s'étendre radialement à l'extérieur dudit organe formant bague (46, 60), ladite partie d'appendice (84) comprenant au moins un alésage (86) afin de loger en son sein l'extrémité saillante (30) de l'élément de chauffage (28), de préférence la partie d'appendice (84) comprenant deux alésages (86) parallèles espacés, afin de loger en leur sein un couple d'extrémités (30) radialement saillantes de l'élément de chauffage (28).

3. Buse de moulage par injection selon la revendication 1 ou 2, caractérisée en ce que les parties de bague avant et arrière (46, 60) comprennent un moyen d'engagement d'interverrouillage (70, 52) formant l'organe formant bague composite à un état assemblé.

4. Buse de moulage par injection selon au moins l'une des revendications 1 à 3 précédentes, caractérisée en ce que la partie formant bague (46) avant comprend une partie de bride (50) arrière s'étendant vers l'intérieur et une partie de bride d'isolation (54) qui s'étend vers l'avant de la partie de bride arrière (50).

5. Buse de moulage par injection selon les revendications 2 et 4, caractérisée en ce qu'une face arrière (50) de la partie de bague avant (46) comprend un tronçon intérieur (56) et un tronçon extérieur (58), afin de former un agencement de siège servant à loger une partie de col (94) de la partie d'appendice (84).

6. Buse de moulage par injection selon la revendication 5, caractérisée en ce que lesdits tronçons de siège (56, 58) sont prévus de manière adjacente à et alignés avec les deux parties d'extrémité (30) saillantes de l'élément de chauffage (28), à leur état assemblé.

7. Buse de moulage par injection selon au moins l'une des revendications 1 à 6 précédentes, caractérisée en ce que l'organe formant buse (10) est adapté de façon à supporter l'organe formant bague arrière (60) sur une partie (24) de son extrémité arrière (14) ayant un diamètre réduit.

8. Buse de moulage par injection selon au moins l'une des revendications 1 à 7 précédentes, caractérisée en ce que la partie de bague arrière (60) comprend une partie de bride (68) s'étendant vers l'intérieur, qui s'insère dans un siège (26) s'étendant vers l'intérieur, au niveau de l'extrémité arrière (14) du corps de buse (10).

9. Buse de moulage par injection selon au moins l'une des revendications 2 à 8 précédentes, caractérisée en ce que la partie de bague arrière (60) comprend une fente radiale (72) s'étendant axialement depuis une face avant (66), ladite fente (72) étant entourée par un siège intérieur (76) et un siège extérieur (78) de plus grandes dimensions, lesdits sièges (76, 78) s'adaptant aux tronçons de sièges (56, 58) de la partie de bague avant (46), à un état assemblé, afin de former une structure de logement pour la partie d'appendice (84).

10. Buse de moulage par injection selon au moins l'une des revendications 1 à 9 précédentes, caractérisée en ce que l'élément de chauffage comprend un fil fin de résistance s'étendant vers l'arrière d'un coude en U adjacent à l'extrémité avant du corps de buse, via ledit canal à spires formant une gorge unique.

11. Buse de moulage par injection selon au moins la revendication 10, caractérisée en ce que le fil fin de résistance comprend deux parties qui s'étendent côte à côte depuis le coude en U, de manière adjacente à l'extrémité avant du corps de buse, isolé vers l'arrière dans un boîtier commun via la gorge unique du canal à spires, se terminant par un couple d'extrémités qui font saillie radialement du canal à spires, au niveau de l'extrémité arrière du corps de buse.

12. Buse de moulage par injection selon au moins l'une des revendications 1 à 11 précédentes, caractérisée en ce qu'une borne froide servant à relier électriquement les éléments de chauffage (28) à une source extérieure de puissance comprend des fils de borne (40) connectés au fil de chauffage (34) de l'élément de chauffage (28), à chacune des extrémités saillantes (30) des éléments de chauffage, lesdits fils de borne (40) présentant un diamètre supérieur au fil fin de chauffage (34) de l'élément de chauffage (28), lesdits fils de borne (40) ayant des extrémités dénudées destinées à être connectées à des connecteurs métalliques (98) allongés qui sont à leur tour logés dans un isolant (112) entouré par un manchon (130) protecteur, tandis que des extrémités dénudées (126) des fils conducteurs extérieurs (128) sont connectées à l'extrémité extérieure des connecteurs (98).
